(19) Europäisches Patentamt
European Patent Office
Office européen des brevets

(11) EP 3 438 178 B1

(12) **EUROPEAN PATENT SPECIFICATION**

(45) Date of publication and mention of the grant of the patent:
**08.04.2020 Bulletin 2020/15**

(21) Application number: **18177188.2**

(22) Date of filing: **12.06.2018**

(51) Int Cl.:
***C08K 3/04*** *(2006.01)*
***C08K 5/103*** *(2006.01)*
***B60C 1/00*** *(2006.01)*
***C08L 9/00*** *(2006.01)*
***C08L 7/00*** *(2006.01)*
***C08K 3/36*** *(2006.01)*
***C08F 236/10*** *(2006.01)*

(54) **RUBBER COMPOSITION AND PNEUMATIC TIRE**

KAUTSCHUKZUSAMMENSETZUNG UND LUFTREIFEN

COMPOSITION DE CAOUTCHOUC ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.08.2017 JP 2017149326**

(43) Date of publication of application:
**06.02.2019 Bulletin 2019/06**

(73) Proprietor: **Sumitomo Rubber Industries, Ltd.**
**Kobe-shi, Hyogo 651-0072 (JP)**

(72) Inventors:
- **SATO, Daisuke**
  **Kobe-shi,, Hyogo 651-0072 (JP)**
- **MIYAZAKI, Sumiko**
  **Kobe-shi,, Hyogo 651-0072 (JP)**

(74) Representative: **TBK**
**Bavariaring 4-6**
**80336 München (DE)**

(56) References cited:
**EP-A1- 1 840 161**
**EP-A1- 2 329 964**
**EP-A1- 2 733 168**
**EP-A1- 3 072 924**
**EP-A1- 3 109 066**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a rubber composition and a pneumatic tire.

### BACKGROUND ART

In recent years, various manufacturing industries have been seeking to reduce carbon dioxide emissions to prevent global warming. The efforts to reduce carbon dioxide emissions in the tire industry have been made from both product and material aspects, such as improving fuel economy of tire products, or replacing rubbers or plasticizers produced from petroleum resources with natural rubber or rubbers synthesized from naturally occurring monomers or with plant oils.

In particular, the use of plant oils contributes not only to reduction of carbon dioxide emissions but also to improvement of functional performance of tires such as enhanced wet grip performance. For example, Patent Literature 1 reports improved wet grip performance using a plant-derived oil with a high oleic acid content.

EP 2 733 168 A1 describes a rubber composition and a tire comprising such a rubber composition. The rubber composition comprises, based on parts by weight per 100 parts by weight of elastomer (phr): (A) cis 1,4-polyisoprene rubber; (B) from 1 to 10 phr of at least one triglyceride vegetable oil; (C) from 30 to 60 phr of a reinforcing filler comprising (1) carbon black, (2) silica, or (3) combination of carbon black and silica; and (D) a silica coupling agent for the silica, where the reinforcing filler contains silica, having a moiety reactive with hydroxyl groups on the silica and another different moiety interactive with carbon-to-carbon double bonds of the rubber.

EP 2 329 964 A1 describes a tire rubber composition comprising: a rubber component that contains a modified diene rubber; and a silica component that contains a silica surface-treated with a silane coupling agent, wherein the amount of the modified diene rubber in 100% by mass of the rubber component is 15% by mass or more, and the dispersion ratio of the silica component is 70% or higher.

EP 1 840 161 A1 describes a process for preparing an oil extended rubber, comprising (a) a step of preparing an oil-in-water type emulsion by emulsifying a vegetable oil having an iodine value of not less than 135 with a surfactant, (b) a step of mixing said emulsion and a modified natural rubber latex, and then aging the mixture, and (c) a step of coagulating the mixture obtained in the step (b) to obtain a lump of a rubber, an oil extended rubber obtained by the preparation process, and a rubber composition for a tire and a tire which use the oil extended rubber.

### CITATION LIST

### PATENT LITERATURE

Patent Literature 1: JP 2005-537369 T

### SUMMARY OF INVENTION

### TECHNICAL PROBLEM

Some inventions have been proposed which involve replacing petroleum-derived plasticizers with non-petroleum-derived materials such as plant oils (glycerol fatty acid triesters). Unfortunately, if a large amount of plasticizers having hydrophilic moieties such as ester groups are incorporated into a rubber composition for tires, the plasticizers may bleed to the surface of the product in service, thereby spoiling the appearance. In addition, the unsaturated bonds in plant oils may reduce the efficiency of crosslinking between rubber and sulfur, thereby resulting in reduced rubber strength.

The present invention aims to provide a rubber composition having good fuel economy and good rubber strength while maintaining good appearance, and a pneumatic tire formed from the rubber composition.

### SOLUTION TO PROBLEM

The present invention relates to a rubber composition as defined in claim 1, containing: a rubber component including a diene rubber; a reinforcing filler; and a glycerol fatty acid triester of plant origin, the diene rubber including an isoprene-based rubber, the glycerol fatty acid triester having a content of saturated fatty acids of 10 to 25% by mass and a content of monovalent unsaturated fatty acids having one unsaturated bond of less than 50% by mass, each based on 100% by mass of constituent fatty acids of the triester, the reinforcing filler being present in an amount of 50

parts by mass or less per 100 parts by mass of the rubber component.

The glycerol fatty acid triester preferably has a content of polyvalent unsaturated fatty acids having two or more unsaturated bonds of 50% by mass or more based on 100% by mass of the constituent fatty acids.

The glycerol fatty acid triester preferably satisfies the following relationship (A):

80 ≤ the content (% by mass) of monovalent unsaturated fatty acids having one unsaturated bond based on 100% by mass of the constituent fatty acids × 1 (the number of unsaturated bonds) + the content (% by mass) of divalent unsaturated fatty acids having two unsaturated bonds based on 100% by mass of the constituent fatty acids × 2 (the number of unsaturated bonds) + the content (% by mass) of trivalent unsaturated fatty acids having three unsaturated bonds based on 100% by mass of the constituent fatty acids × 3 (the number of unsaturated bonds) ≤ 200.

The rubber composition preferably contains 2 to 20 parts by mass of the glycerol fatty acid triester per 100 parts by mass of the rubber component.

The rubber component preferably includes, based on 100% by mass thereof, at least 5% by mass of a copolymer, the copolymer being synthesized by copolymerizing a conjugated diene monomer with a compound represented by the following Formula (1):

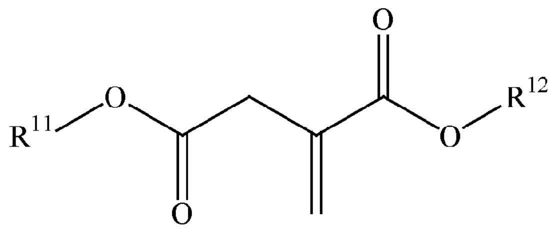

(1)

wherein $R^{11}$ and $R^{12}$ are the same or different and each denote a hydrogen atom or a C1-C30 hydrocarbon group.

The copolymer preferably contains, based on 100% by mass of structural units thereof, 5 to 95% by mass of units derived from the conjugated diene monomer and 5 to 95% by mass of units derived from the compound of Formula (1).

Preferably, the rubber composition exhibits the maximum loss tangent (tan δ) at -46°C or lower in a temperature dependence curve of tan δ measured at a strain amplitude of ±0.25%, and has a ratio of a loss tangent (tan δ at 20°C) measured at 20°C and a strain amplitude of ±0.25% to a loss tangent (tan δ at 0°C) measured at 0°C and a strain amplitude of ±0.25% that satisfies the following relationship (X):

$$\tan\delta \text{ at } 20°C / \tan\delta \text{ at } 0°C \geq 0.80.$$

The reinforcing filler includes carbon black and a microfibrillated plant fiber.

The rubber composition is preferably a rubber composition for tires.

Another aspect of the present invention is a pneumatic tire, including a sidewall formed from the rubber composition.

ADVANTAGEOUS EFFECTS OF INVENTION

The rubber composition of the present invention contains:
a rubber component including a diene rubber; a reinforcing filler; and a glycerol fatty acid triester of plant origin, wherein

the diene rubber includes an isoprene-based rubber, the glycerol fatty acid triester has a content of saturated fatty acids of 10 to 25% by mass and a content of monovalent unsaturated fatty acids having one unsaturated bond of less than 50% by mass, each based on 100% by mass of the constituent fatty acids of the triester, the reinforcing filler is present in an amount of 50 parts by mass or less per 100 parts by mass of the rubber component and the reinforcing filler includes carbon black and a microfibrillated plant fiber. Such a rubber composition has good fuel economy and good rubber strength while maintaining good appearance.

DESCRIPTION OF EMBODIMENTS

The rubber composition of the present invention contains a rubber component including a diene rubber, a reinforcing filler, and a glycerol fatty acid triester of plant origin. The diene rubber includes an isoprene-based rubber. The glycerol fatty acid triester has a content of saturated fatty acids of 10 to 25% by mass and a content of monovalent unsaturated fatty acids having one unsaturated bond of less than 50% by mass, each based on 100% by mass of the constituent fatty acids of the triester. The reinforcing filler is present in an amount of 50 parts by mass or less per 100 parts by mass of the rubber component.

The present invention provides good fuel economy and good rubber strength while maintaining good appearance, probably according to the mechanism described below.

The studies of the present inventors revealed that the incorporation of plant oils (glycerol fatty acid triesters) can improve fuel economy. However, they also found that, if a large amount of plant oils having hydrophilic moieties such as ester groups are incorporated into a rubber composition for tires mainly containing hydrophobic materials, the plant oils disadvantageously bleed to the surface of the tire in service, thereby spoiling the appearance of the tire. Moreover, it was also found that the unsaturated bonds in plant oils may reduce the efficiency of crosslinking between rubber and sulfur, thereby resulting in reduced rubber strength. Thus, the present inventors discovered that the incorporation of plant oils unfortunately does not provide good fuel economy and good rubber strength while maintaining good appearance.

The inventors have conducted extensive research on the problem they newly found, resulting in focusing attention on the unsaturated bonds in plant oils (glycerol fatty acid triesters) as well as the saturated fatty acid content and unsaturated fatty acid content. Accordingly, they have found that when a plant oil (glycerol fatty acid triester) having a predetermined unsaturated bond content (predetermined saturated fatty acid and unsaturated fatty acid contents) is incorporated into a rubber composition, the unsaturated bond portions of the glycerol fatty acid triester (the unsaturated bond portions of the fatty acids forming the glycerol fatty acid triester) may be moderately reacted (by vulcanization with a vulcanizing agent) with a diene rubber (the unsaturated bonds in the diene rubber) to allow the glycerol fatty acid triester to produce a lowering effect on the grass transition temperature of the rubber composition, resulting in good fuel economy. At the same time, the moderate binding of the glycerol fatty acid triester to the rubber reduces surface bleeding of the glycerol fatty acid triester, and therefore good appearance, fuel economy, and rubber strength are obtained. These findings have led to the completion of the present invention.

When the glycerol fatty acid triester contains too many unsaturated bonds, reactions can occur at too many sites, which may reduce the crosslinking efficiency of the diene rubber, resulting in reduced rubber strength. Conversely, when the glycerol fatty acid triester contains too few unsaturated bonds, it cannot be moderately bound to the rubber, and therefore surface bleeding of the glycerol fatty acid triester cannot be sufficiently suppressed, thereby possibly resulting in deteriorated appearance, fuel economy, or rubber strength. In contrast, when the glycerol fatty acid triester has a content of saturated fatty acids of 10 to 25% by mass and a content of monovalent unsaturated fatty acids having one unsaturated bond of less than 50% by mass, each based on 100% by mass of the constituent fatty acids of the triester, it is presumed that the unsaturated bond portions of the glycerol fatty acid triester (the unsaturated bond portions of the fatty acids forming the glycerol fatty acid triester) will be moderately reacted with the diene rubber to allow the glycerol fatty acid triester to produce a lowering effect on the grass transition temperature of the rubber composition, resulting in good fuel economy; at the same time, the moderate binding of the glycerol fatty acid triester to the rubber reduces surface bleeding of the glycerol fatty acid triester, and therefore good appearance, fuel economy, and rubber strength are obtained. Accordingly, the present invention provides good rubber strength even with a reinforcing filler content of 50 parts by mass or less, and thus achieves good fuel economy and good rubber strength while maintaining good appearance. This effect is significant particularly when the diene rubber used is an isoprene-based rubber.

Owing to the interaction between the diene rubber (isoprene-based rubber) and the glycerol fatty acid triester described above, the present invention synergistically improves the balance of fuel economy and rubber strength while maintaining good appearance.

Moreover, since the glycerol fatty acid triester used is of plant origin, not a fossil resource, it is possible to provide tires contributing to a low-carbon society. Thus, the present invention provides safer and more environmentally friendly tires.

Furthermore, the incorporation of the plant oil (glycerol fatty acid triester) reduces differences between the

rolling resistance at normal temperature and that at low temperatures and therefore the temperature dependence of fuel economy, which means that the deterioration of fuel economy is reduced even in cold winter, and thus the rubber composition can be suitably used as a rubber composition for fuel efficient tires.

Note that the mechanism of the present invention described herein is just a presumed one.

The rubber composition of the present invention contains a specific glycerol fatty acid triester of plant origin.

The term "glycerol fatty acid triester" refers to an ester of a fatty acid and a glycerol and is also called triglyceride or tri-O-acylglycerol.

It is known that the fatty acids forming glycerol fatty acid triesters of plant origin usually include palmitic acid (carbon number: 16, unsaturated bond number: 0), stearic acid (carbon number: 18, unsaturated bond number: 0), oleic acid (carbon number: 18, unsaturated bond number: 1), and linoleic acid (carbon number: 18, unsaturated bond number: 2) as main components. The combined content of palmitic acid, stearic acid, oleic acid, and linoleic acid based on 100% by mass of the constituent fatty acids is usually 80% by mass or more, preferably 90% by mass or more.

In the glycerol fatty acid triester, the content of saturated fatty acids based on 100% by mass of the constituent fatty acids is 10 to 25% by mass. The lower limit of the content is preferably 12% by mass or more, while the upper limit is preferably 20% by mass or less, more preferably 18% by mass or less, still more preferably 15% by mass or less. When the content of saturated fatty acids is 10% by mass or more, the glycerol fatty acid triester is prevented from containing too many unsaturated bonds and thus from having too many reactive sites, thereby resulting in a good softening effect and thus good fuel economy. In addition, a reduction in crosslinking efficiency of the diene rubber can also be prevented, resulting in good rubber strength. When the content of saturated fatty acids is 25% by mass or less, the glycerol fatty acid triester is prevented from containing too few unsaturated bonds, and thus will be moderately bound to the rubber so that surface bleeding of the glycerol fatty acid triester can be sufficiently reduced to obtain good appearance, fuel economy, and rubber strength. In addition, since the content of saturated fatty acids having relatively high melting points is low, the glycerol fatty acid triester has a low melting point, resulting in reduced energy loss and thus good fuel economy.

In the glycerol fatty acid triester, the content of monovalent unsaturated fatty acids having one unsaturated bond based on 100% by mass of the constituent fatty acids is less than 50% by mass, preferably 45% by mass or less, more preferably 40% by mass or less, still more preferably 35% by mass or less, particularly preferably 30% by mass or less. In this case, the number of unsaturated bonds in the glycerol fatty acid triester can be appropriately adjusted so that the effects can be sufficiently achieved. The lower limit of the content is not particularly critical, but is preferably 8% by mass or more, more preferably 14% by mass or more, still more preferably 20% by mass or more, to more suitably achieve the effects.

In the glycerol fatty acid triester, the content of polyvalent unsaturated fatty acids having two or more unsaturated bonds based on 100% by mass of the constituent fatty acids is preferably 50% by mass or more, more preferably 55% by mass or more, still more preferably 60% by mass or more. In this case, the number of unsaturated bonds in the glycerol fatty acid triester can be more appropriately adjusted so that the effects can be more suitably achieved. The upper limit of the content is not particularly critical, but is preferably 90% by mass or less, more preferably 80% by mass or less, still more preferably 70% by mass or less, to more suitably achieve the effects.

In the glycerol fatty acid triester, the content of divalent unsaturated fatty acids having two unsaturated bonds based on 100% by mass of the constituent fatty acids is preferably 35% by mass or more, more preferably 40% by mass or more, still more preferably 45% by mass or more, but is preferably 80% by mass or less, more preferably 70% by mass or less, still more preferably 65% by mass or less. In this case, the number of unsaturated bonds in the glycerol fatty acid triester can be more appropriately adjusted so that the effects can be more suitably achieved.

In the glycerol fatty acid triester, the content of trivalent unsaturated fatty acids having three unsaturated bonds based on 100% by mass of the constituent fatty acids is preferably 3% by mass or more, more preferably 5% by mass or more, but is preferably 25% by mass or less, more preferably 15% by mass or less. In this case, the number of unsaturated bonds in the glycerol fatty acid triester can be more appropriately adjusted so that the effects can be more suitably achieved.

In the glycerol fatty acid triester, the total content of unsaturated fatty acids based on 100% by mass of the constituent fatty acids is preferably 75% by mass or more, more preferably 80% by mass or more, still more preferably 82% by mass or more, particularly preferably 85% by mass or more, but is preferably 90% by mass or less, more preferably 88% by mass or less. In this case, the number of unsaturated bonds in the glycerol fatty acid triester can be more appropriately adjusted so that the effects can be more suitably achieved.

The glycerol fatty acid triester preferably satisfies relationship (A) below. In this case, the number of unsaturated bonds in the glycerol fatty acid triester can be more appropriately adjusted so that the effects can be more suitably achieved.

To more suitably achieve the effects, the lower limit in relationship (A) is preferably 100 or more, more preferably 120 or more, still more preferably 140 or more, particularly preferably 150 or more. The upper limit in relationship (A) is preferably 190 or less, more preferably 180 or less, still more preferably 170 or less.

$$(A): 80 \leq \text{the content (\% by mass) of monovalent unsaturated fatty acids having one unsaturated bond based on 100\% by mass of the constituent fatty acids} \times 1 \text{ (the number of unsaturated bonds)} + \text{the content (\% by mass) of divalent unsaturated fatty acids having two unsaturated bonds based on 100\% by mass of the constituent fatty acids} \times 2 \text{ (the number of unsaturated bonds)} + \text{the content (\% by mass) of trivalent unsaturated fatty acids having three unsaturated bonds based on 100\% by mass of the constituent fatty acids} \times 3 \text{ (the number of unsaturated bonds)} \leq 200$$

Since the glycerol fatty acid triester is of plant origin, the unsaturated bonds in the constituent fatty acids are usually double bonds.

To more suitably achieve the effects, the constituent fatty acids of the glycerol fatty acid triester preferably have an average carbon number of 15 or more, more preferably 16 or more, still more preferably 17 or more, but preferably 21 or less, more preferably 20 or less, still more preferably 19 or less.

Herein, the average carbon number of the constituent fatty acids is calculated using the following Equation (D):

$$\text{Average carbon number of constituent fatty acids} = \Sigma[\text{the content (\% by mass) of fatty acids having a carbon number of } n \text{ based on 100\% by mass of the constituent fatty acids} \times n \text{ (carbon number)}/100].$$

The glycerol fatty acid triester is preferably liquid at room temperature (25°C). The glycerol fatty acid triester preferably has a melting point of 20°C or lower, more preferably 17°C or lower, still more preferably 0°C or lower, particularly preferably -10°C or lower. In this case, better fuel economy and better wet grip performance can be obtained.

The lower limit of the melting point is not particularly critical, but is preferably -100°C or higher, more preferably -90°C or higher, to obtain good dry grip performance.

The melting point of the glycerol fatty acid triester may be measured by differential scanning calorimetry (DSC).

The glycerol fatty acid triester preferably has an iodine number of 60 or more, more preferably 70 or more, still more preferably 80 or more, particularly preferably 100 or more, most preferably 120 or more. The iodine number is also preferably 160 or less, more preferably 150 or less, still more preferably 135 or less. When the iodine number is within the range indicated above, the effects can be more suitably achieved.

Herein, the iodine number refers to the amount of halogen in grams calculated as iodine bonded when a halogen is reacted with 100 g of the glycerol fatty acid triester, and is measured by potentiometric titration in accordance with JIS K 0070.

The glycerol fatty acid triester used in the present invention may be any glycerol fatty acid triester of plant origin that has a content of saturated fatty acids of 10 to 25% by mass and a content of monovalent unsaturated fatty acids having one unsaturated bond of less than 50% by mass, each based on 100% by mass of the constituent fatty acids of the triester. Examples include soybean oil, sesame oil, rice oil, safflower oil, corn oil, olive oil, and rapeseed oil. Among these, soybean oil, sesame oil, rice oil, and rapeseed oil are preferred, with soybean oil, sesame oil, or rice oil being more preferred, with soybean oil being still more preferred, because they are inexpensive, available in bulk, and highly effective in improving performance.

The fatty acid composition of the glycerol fatty acid triester may be determined by gas-liquid chromatography (GLC) .

Examples of the glycerol fatty acid triester include products of The Nisshin Oillio Group, Ltd., J-Oil Mills. Inc., Showa Sangyo, Fuji Oil Co., Ltd., Miyoshi Oil & Fat Co., Ltd., and Boso oil and fat Co., Ltd.

The amount of the glycerol fatty acid triester per 100 parts by mass of the rubber component is preferably 2 parts by mass or more, more preferably 5 parts by mass or more, still more preferably 10 parts by mass or more, particularly preferably 15 parts by mass or more. When the amount is 2 parts by mass or more, the effects can be more suitably achieved. The amount of the glycerol fatty acid triester is preferably 40 parts by mass or less, more preferably

30 parts by mass or less, still more preferably 20 parts by mass or less. When the amount is 40 parts by mass or less, the effects can be more suitably achieved.

A plasticizer (oil) other than the glycerol fatty acid triester (the glycerol fatty acid triester specified herein) may be used in combination with the glycerol fatty acid triester.

The oil may be, for example, a process oil, plant fat or oil other than the glycerol fatty acid triester, or a mixture thereof. Examples of the process oil include paraffinic process oils, aromatic process oils, and naphthenic process oils. Examples of the plant fat or oil include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These oils may be used alone, or two or more of these may be used in combination.

The oil may be a product of, for example, Idemitsu Kosan Co., Ltd., Sankyo Yuka Kogyo K.K., Japan Energy Corporation, Olisoy, H&R, Hokoku Corporation, Showa Shell Sekiyu K.K., or Fuji Kosan Co., Ltd.

The amount of the oil, if present, per 100 parts by mass of the rubber component is preferably 1 part by mass or more, more preferably 10 parts by mass or more, but is preferably 35 parts by mass or less, more preferably 30 parts by mass or less. The amount of the oil includes the amount of the oils contained in rubbers (oil extended rubbers).

In the case where the plasticizer (oil) other than the glycerol fatty acid triester is used together with the glycerol fatty acid triester, the combined amount of the glycerol fatty acid triester and the plasticizer (oil) other than the glycerol fatty acid triester (the total amount of plasticizers) may suitably be the same as the amount of the glycerol fatty acid triester when used alone.

In the present invention, the rubber component includes a diene rubber.

Examples of diene rubbers that can be used include isoprene-based rubbers, polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile butadiene rubber (NBR) . These rubbers may be used alone, or two or more of these may be used in combination. Examples of other rubbers that may be used in the rubber component include butyl-based rubbers and fluororubbers. These rubbers may be used alone, or two or more of these may be used in combination.

Herein, the term "rubber component" refers to rubbers having a weight average molecular weight (Mw) of 300,000 or more, preferably 350,000 or more. The upper limit of the Mw is not particularly critical, but is preferably 1,500,000 or less, more preferably 1,000,000 or less.

Herein, the Mw and the number average molecular weight (Mn) may be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

To more suitably achieve the effects, the amount of the diene rubber based on 100% by mass of the rubber component is preferably 60% by mass or more, more preferably 80% by mass or more, still more preferably 90% by mass or more, particularly preferably 100% by mass.

The diene rubber includes an isoprene-based rubber. Preferred examples of diene rubbers other than isoprene-based rubbers include BR and SBR. It is more preferred to use a combination of an isoprene-based rubber and BR.

Examples of the isoprene-based rubber include natural rubber (NR), polyisoprene rubber (IR), refined NR, modified NR, and modified IR. The NR may be one commonly used in the tire industry such as SIR20, RSS#3, or TSR20. Non-limiting examples of the IR include those commonly used in the tire industry such as IR2200. Examples of the refined NR include deproteinized natural rubber (DPNR) and highly purified natural rubber (UPNR) . Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These rubbers may be used alone, or two or more of these may be used in combination. Among these rubbers, NR is preferred.

The amount of the isoprene-based rubber based on 100% by mass of the rubber component is preferably 5% by mass or more, more preferably 10% by mass or more, still more preferably 20% by mass or more, particularly preferably 30% by mass or more, most preferably 40% by mass or more, but is preferably 80% by mass or less, more preferably 70% by mass or less, still more preferably 60% by mass or less. When the amount is within the range indicated above, the effects tend to be better achieved.

Non-limiting examples of the BR include BR having high cis content, such as BR1220 available from Zeon Corporation and BR130B and BR150B both available from Ube Industries, Ltd.; BR containing syndiotactic polybutadiene crystals, such as VCR412 and VCR617 both available from Ube Industries, Ltd.; and BR synthesized using rare earth catalysts (rare earth-catalyzed BR). These rubbers may be used alone, or two or more of these may be used in combination. In particular, the BR preferably has a cis content of 97% by mass or more to improve rubber strength.

The BR preferably has a weight average molecular weight (Mw) of 300,000 or more, more preferably 350,000 or more. The Mw is preferably 550,000 or less, more preferably 500,000 or less, still more preferably 450,000 or less. When the Mw is within the range indicated above, the effects can be more suitably achieved.

The BR may be an unmodified or modified BR.

The modified BR may be any BR having a functional group interactive with a filler such as silica. For example, it may be a chain end-modified BR obtained by modifying at least one chain end of BR with a compound (modifier) having the functional group (chain end-modified BR terminated with the functional group); a backbone-modified BR having the functional group in the backbone; a backbone- and chain end-modified BR having the functional group in both the backbone and chain end (e.g., a backbone- and chain end-modified BR in which the backbone has the functional group and at least one chain end is modified with the modifier); or a chain end-modified BR which has been modified (coupled) with a polyfunctional compound having two or more epoxy groups in the molecule so that a hydroxyl or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. To more suitably achieve the effects, amino (preferably amino whose hydrogen atom is replaced with a C1-C6 alkyl group), alkoxy (preferably C1-C6 alkoxy), and alkoxysilyl (preferably C1-C6 alkoxysilyl) groups are preferred among these.

The BR may be a product of, for example, Ube Industries, Ltd., JSR Corporation, Asahi Kasei Corporation, or Zeon Corporation.

The amount of BR, if present, based on 100% by mass of the rubber component is preferably 5% by mass or more, more preferably 10% by mass or more, still more preferably 20% by mass or more, particularly preferably 30% by mass or more, most preferably 40% by mass or more, but is preferably 80% by mass or less, more preferably 70% by mass or less, still more preferably 60% by mass or less. When the amount is within the range indicated above, the effects tend to be better achieved.

Non-limiting examples of the SBR include emulsion-polymerized styrene-butadiene rubber (E-SBR) and solution-polymerized styrene-butadiene rubber (S-SBR). These rubbers may be used alone, or two or more of these may be used in combination.

The SBR preferably has a styrene content of 5% by mass or more, more preferably 10% by mass or more, still more preferably 15% by mass or more. With a styrene content of not less than the lower limit, excellent wet grip performance tends to be sufficiently obtained. The styrene content is also preferably 60% by mass or less, more preferably 40% by mass or less, still more preferably 30% by mass or less . With a styrene content of not more than the upper limit, excellent rubber strength and excellent fuel economy tend to be obtained.

Herein, the styrene content of the SBR is determined by $^1$H-NMR.

The SBR may be a product manufactured or sold by, for example, Sumitomo Chemical Co., Ltd., JSR Corporation, Asahi Kasei Corporation, or Zeon Corporation.

The SBR may be an unmodified or modified SBR. Examples of the modified SBR include those in which functional groups as mentioned for the modified BR are introduced.

The amount of SBR, if present, based on 100% by mass of the rubber component is preferably 5% by mass or more, more preferably 10% by mass or more, still more preferably 20% by mass or more, particularly preferably 30% by mass or more, most preferably 40% by mass or more, but is preferably 80% by mass or less, more preferably 70% by mass or less, still more preferably 60% by mass or less. When the amount is within the range indicated above, the effects tend to be better achieved.

To more suitably achieve the effects, the combined amount of the isoprene-based rubber and BR based on 100% by mass of the rubber component is preferably 80% by mass or more, more preferably 90% by mass or more, and may be 100% by mass.

The diene rubber preferably includes a copolymer synthesized by copolymerizing a conjugated diene monomer with a compound represented by Formula (1) below. In other words, the diene rubber preferably includes a copolymer that contains units derived from a conjugated diene monomer and units derived from a compound of Formula (1).

Since the ester structure of the copolymer has high affinity for the triester structure of the glycerol fatty acid triester, the use of the copolymer reduces the rate of surface bleeding of the glycerol fatty acid triester, thereby resulting in better appearance, fuel economy, and rubber strength.

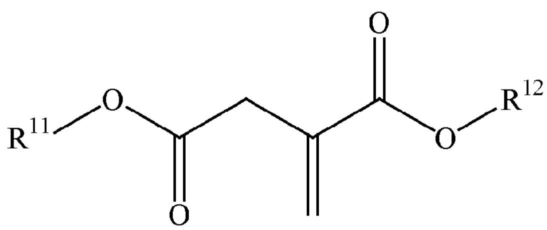

(1)

In Formula (1), $R^{11}$ and $R^{12}$ are the same or different and each denote a hydrogen atom or a C1-C30 hydrocarbon group.

The structural units of the copolymer include units derived from a conjugated diene monomer. Examples of the conjugated diene monomer include 1,3-butadiene, isoprene, and 2,3-dimethyl-1,3-butadiene. In view of fuel economy and rubber strength, 1,3-butadiene or isoprene is preferred among these, with 1,3-butadiene being more preferred. These monomers may be used alone, or two or more of these may be used in combination.

In the copolymer, the amount of the conjugated diene monomer units based on 100% by mass of the structural units forming the copolymer is preferably 5% by mass or more, more preferably 30% by mass or more, still more preferably 50% by mass or more, particularly preferably 70% by mass or more, but is preferably 95% by mass or less, more preferably 90% by mass or less. When the amount is 5% by mass or more, good rubber strength tends to be obtained. When the amount is 95% by mass or less, good fuel economy tends to be obtained.

The structural units of the copolymer include units derived from a compound represented by the following Formula (1) :

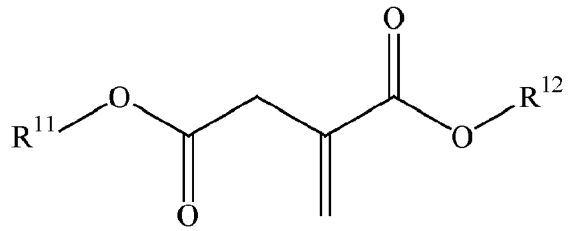

(1)

wherein $R^{11}$ and $R^{12}$ are the same or different and each denote a hydrogen atom or a C1-C30 hydrocarbon group.

The hydrocarbon group for $R^{11}$ and $R^{12}$ may be a linear, branched, or cyclic group, and examples include aliphatic hydrocarbon groups, alicyclic hydrocarbon groups, and aromatic hydrocarbon groups. Preferred among these are aliphatic hydrocarbon groups. The number of carbon atoms in the hydrocarbon group is preferably 1 to 20, more preferably 1 to 10.

The aliphatic hydrocarbon group for $R^{11}$ and $R^{12}$ is preferably a C1-C20, more preferably C1-C10 group. Preferred examples include alkyl groups, specifically, for example, methyl, ethyl, n-propyl, isopropyl, n-butyl, iso-butyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups. Preferred among these are methyl, ethyl, n-propyl, isopropyl, n-butyl, iso-butyl, sec-butyl, and tert-butyl groups, with ethyl, n-propyl, isopropyl, n-butyl, and iso-butyl groups being more preferred, with an ethyl group being still more preferred, because in this case, the balance of fuel economy and rubber strength can be significantly improved while obtaining good processability.

The alicyclic hydrocarbon group is preferably a C3-C8 group, and specific examples include cyclopropyl, cyclobutyl, cyclopentyl, cyclohexyl, cycloheptyl, cyclooctyl, cyclopropenyl, cyclobutenyl, cyclopentenyl, cyclohexenyl, cycloheptenyl, and cyclooctenyl groups.

The aromatic hydrocarbon group is preferably a C6-C10 group, and specific examples include phenyl, benzyl, phenethyl, tolyl, xylyl, and naphthyl groups. The tolyl or xylyl group may have a methyl substituent (s) at any of the ortho, meta, and para positions on the benzene ring.

Specific examples of the compound of Formula (1) include itaconic acid, 1-methyl itaconate, 4-methyl itaconate, dimethyl itaconate, 1-ethyl itaconate, 4-ethyl itaconate, diethyl itaconate, 1-propyl itaconate, 4-propyl itaconate, dipropyl itaconate, 1-butyl itaconate, 4-butyl itaconate, dibutyl itaconate, and 1-ethyl-4-methyl itaconate. Among these, diethyl itaconate, dibutyl itaconate, and 1-propyl itaconate are preferred, with diethyl itaconate being more preferred, because in this case, the balance of fuel economy and rubber strength can be significantly improved while obtaining good processability. These compounds may be used alone, or two or more of these may be used in combination.

In the copolymer, the amount of the compound (1) units based on 100% by mass of the structural units forming the copolymer is preferably 5% by mass or more, more preferably 8% by mass or more, still more preferably 10% by mass or more, but is preferably 95% by mass or less, more preferably 50% by mass or less, still more preferably 40% by mass or less, particularly preferably 30% by mass or less. When the amount is 5% by mass or more, good fuel economy tends to be obtained. When the amount is 95% by mass or less, good rubber strength tends to be obtained.

The structural units of the copolymer preferably include units derived from a compound represented by Formula (2) below. When the copolymer contains monomer units derived from a compound of Formula (2), preferably styrene, in addition to the above-mentioned structural units, the balance of fuel economy and rubber strength can be more significantly improved while obtaining good processability.

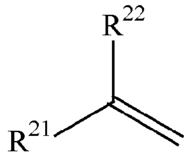

(2)

In Formula (2), $R^{21}$ denotes a hydrogen atom, a C1-C3 aliphatic hydrocarbon group, a C3-C8 alicyclic hydrocarbon group, or a C6-C10 aromatic hydrocarbon group, and $R^{22}$ denotes a hydrogen atom or a methyl group.

Examples of the C1-C3 aliphatic hydrocarbon group in the compound of Formula (2) include C1-C3 alkyl groups such as methyl, ethyl, n-propyl, and isopropyl groups. Preferred among these is a methyl group.

Examples of the C3-C8 alicyclic hydrocarbon group in the compound of Formula (2) include those mentioned for the compound of Formula (1).

Examples of the C6-C10 aromatic hydrocarbon group in the compound of Formula (2) include those mentioned for the compound of Formula (1). Phenyl, tolyl, and naphthyl groups are preferred, with a phenyl group being more preferred, because of their high reactivity.

$R^{21}$ is preferably a C6-C10 aromatic hydrocarbon group. $R^{22}$ is preferably a hydrogen atom.

Examples of the compound of Formula (2) include styrene, 2-methylstyrene, 3-methylstyrene, 4-methylstyrene, $\alpha$-methylstyrene, 2,4-dimethylstyrene, vinylethylbenzene, $\alpha$-vinylnaphthalene, $\beta$-vinylnaphthalene, and vinylxylene. Among these, styrene, $\alpha$-methylstyrene, $\alpha$-vinylnaphthalene, and $\beta$-vinylnaphthalene are preferred, with styrene being more preferred, because of their high reactivity.

In the copolymer, the amount of the compound (2) units based on 100% by mass of the structural units forming the copolymer is preferably 1% by mass or more, more preferably 5% by mass or more, still more preferably 10% by mass or more, but is preferably 50% by mass or less, more preferably 30% by mass or less, still more preferably 20% by mass or less. When the amount is within the range indicated above, the effects can be more suitably achieved.

In the copolymer, the combined amount of the compound (1) units and the compound (2) units based on 100% by mass of the structural units forming the copolymer is preferably 5% by mass or more, more preferably 8% by mass or more, still more preferably 10% by mass or more, particularly preferably 15% by mass or more, but is preferably 95% by mass or less, more preferably 70% by mass or less, still more preferably 50% by mass or less, particularly preferably 40% by mass or less, most preferably 30% by mass or less. When the combined amount is within the range indicated above, the effects can be more suitably achieved.

The amounts of monomer units, such as the conjugated diene monomer units and compound (1) or (2) units, in the copolymer may be measured using an NMR spectrometer (Bruker).

The copolymer may be produced by any copolymerization method, such as solution polymerization, emulsion polymerization, gas phase polymerization, or bulk polymerization. Emulsion polymerization is preferred because this method allows for high yield production of the copolymer. The copolymer may be prepared with reference to, for example, WO2015/075971, which is incorporated herein by reference.

The copolymer is preferably produced by emulsion polymerization in the presence of a chain transfer agent. The thus produced copolymer further improves processability, fuel economy, and rubber strength.

The term "chain transfer agent" refers to a radical polymerization controlling agent that can act on the growing polymer chain end to terminate the polymer growth while generating a new polymerization-initiating radical. This agent enables control of the molecular weight and molecular weight distribution of the polymer (reduction of the molecular weight and narrowing of the molecular weight distribution), and control of the polymer chain end structure, for example.

Examples of the chain transfer agent include n-octyl mercaptan, n-nonyl mercaptan, n-decyl mercaptan, n-dodecyl mercaptan, t-dodecyl mercaptan, and n-hexadecyl mercaptan, with t-dodecyl mercaptan being preferred because of easier control of the molecular weight.

The chain transfer agent may also suitably be a compound that contains a functional group having affinity for a reinforcing filler and a mercapto group. When a compound that contains a mercapto group and further a functional group having affinity for a reinforcing filler is used as the chain transfer agent, the functional group having affinity for a reinforcing filler will be introduced into the polymer chain end, with the result that fuel economy and rubber strength can be more significantly improved. Examples of the functional group having affinity for a reinforcing filler include amino, amide, alkoxysilyl, isocyanate, imino, imidazole, urea, ester, ether, carbonyl, carboxyl, hydroxyl, nitrile, and pyridyl groups. Preferred among these are alkoxysilyl or ester groups, with alkoxysilyl groups being more preferred.

Suitable examples of such compounds containing an ester group include methyl 3-mercaptopropionate, ethyl 3-mercaptopropionate, propyl 3-mercaptopropionate, butyl 3-mercaptopropionate, pentyl 3-mercaptopropionate, hexyl 3-mercaptopropionate, heptyl 3-mercaptopropionate, octyl 3-mercaptopropionate, 2-ethylhexyl 3-mercaptopropionate, 2-ethylhexyl mercaptoethanoate, 2-mercaptoethyl methanoate, 2-mercaptoethyl ethanoate, 2-mercaptoethyl propionate, 2-mercaptoethyl butanoate, 2-mercaptoethyl pentanoate, 2-mercaptoethyl hexanoate, 2-mercaptoethyl heptanoate, 2-mercaptoethyl octanoate, and 2-mercaptomethyl octanoate, with 2-ethylhexyl 3-mercaptopropionate or 2-mercaptoethyl octanoate being preferred.

The copolymer preferably has a weight average molecular weight (Mw) of 5,000 or more, more preferably 50,000 or more, still more preferably 100,000 or more, particularly preferably 300,000 or more, most preferably 450,000 or more. The weight average molecular weight is also preferably 2, 000, 000 or less, more preferably 1,500,000 or less, still more preferably 1,000,000 or less. A Mw of 5,000 or more tends to provide good fuel economy and good rubber strength. A Mw of 2,000,000 or less tends to provide good processability.

The ratio of Mw to Mn (number average molecular weight), i.e. molecular weight distribution (Mw/Mn), of the copolymer is preferably 2.1 or more, more preferably 2.5 or more, still more preferably 3.0 or more, but is preferably 11 or less, more preferably 8.0 or less, still more preferably 5.0 or less. A molecular weight distribution of 2.1 or more tends to provide good processability. A molecular weight distribution of 11 or less tends to provide good fuel economy.

The copolymer preferably has a glass transition temperature (Tg) of -100°C or higher, more preferably -80°C or higher, but preferably 100°C or lower, more preferably 0°C or lower. When the grass transition temperature is within the above range, the effects can be more suitably achieved.

Herein, the Tg is measured at a rate of temperature increase of 10°C/min in accordance with JIS K 7121:1987 using a differential scanning calorimeter (Q200) available from TA Instruments, Japan.

The copolymer preferably has a Mooney viscosity ($ML_{1+4}$) at 130°C of 30 or higher, more preferably 40 or higher, but preferably 100 or lower, more preferably 80 or lower. When the $ML_{1+4}$ is within the above range, the effects can be more suitably achieved.

The Mooney viscosity ($ML_{1+4}$, 130°C) is measured at 130°C in accordance with JIS-K 6300.

The amount of the copolymer, if present, based on 100% by mass of the rubber component is preferably 5% by mass or more, more preferably 10% by mass or more, but is preferably 60% by mass or less, more preferably 30% by mass or less, still more preferably 20% by mass or less. When the amount is within the range indicated above, the effects tend to be better achieved.

The rubber composition of the present invention contains a reinforcing filler as defined in claim 1.

Examples of the reinforcing filler include silica, carbon black, calcium carbonate, talc, alumina, clay, aluminum hydroxide, and aluminum oxide. Other suitable reinforcing fillers are those having a particle width or thickness of 50 nm or less, including plate-like fillers such as graphene and mica, inorganic minerals such as montmorillonite and sepiolite, and organic fibers such as pulp and microfibrillated plant fibers.

The amount of the reinforcing filler per 100 parts by mass of the rubber component is preferably 15 parts by mass or more, more preferably 20 parts by mass or more, still more preferably 25 parts by mass or more, particularly preferably 35 parts by mass or more. An amount of not less than the lower limit tends to provide sufficient reinforcing properties leading to better rubber strength and better wet grip performance. Also, the amount is 50 parts by mass or less, preferably 40 parts by mass or less. An amount of not more than the upper limit tends to lead to better fuel economy. Since the rubber composition of the present invention contains a specific glycerol fatty acid triester, it has good rubber strength even though the reinforcing filler is present in a relatively small amount as indicated above. Thus, the rubber composition has good fuel economy and good rubber strength while maintaining good appearance.

To more suitably achieve the effects, the ratio of the amount of the plasticizer to the amount of the reinforcing filler preferably satisfies relationship (B) below.

To more suitably achieve the effects, the lower limit in relationship (B) is preferably 0.10 or higher, more preferably 0.20 or higher, particularly preferably 0.30 or higher, while the upper limit is preferably 0.70 or lower, more preferably 0.60 or lower, particularly preferably 0.50 or lower, most preferably 0.40 or lower.

(B): $0.04 \leq$ the amount (parts by mass) of the plasticizer/the amount (parts by mass) of the reinforcing filler $\leq 0.80$

Non-limiting examples of the carbon black include N134, N110, N220, N234, N219, N339, N330, N326, N351, N550, and N762. These types of carbon black may be used alone, or two or more of these may be used in combination.

The carbon black preferably has a nitrogen adsorption specific surface area ($N_2SA$) of 5 $m^2/g$ or more, more preferably 30 $m^2/g$ or more, still more preferably 50 $m^2/g$ or more. A $N_2SA$ of not less than the lower limit tends to lead to better rubber strength and better wet grip performance. The $N_2SA$ is also preferably 300 $m^2/g$ or less, more preferably 180 $m^2/g$ or less, still more preferably 120 $m^2/g$ or less, particularly preferably 100 $m^2/g$ or less, most preferably 90 $m^2/g$ or less. Carbon black having a $N_2SA$ of not more than the upper limit tends to disperse better, thereby resulting in better rubber strength, wet grip performance, and fuel economy.

The nitrogen adsorption specific surface area of the carbon black is determined in accordance with JIS K 6217-2:2001.

The carbon black preferably has a dibutyl phthalate oil absorption (DBP) of 50 mL/100 g or more, more preferably 100 mL/100 g or more. A DBP of not less than the lower limit tends to lead to better rubber strength and better wet grip performance. The DBP of the carbon black is also preferably 200 mL/100 g or less, more preferably 150 mL/100 g or less. Carbon black having a DBP of not more than the upper limit tends to disperse better, thereby resulting in better rubber strength, wet grip performance, and fuel economy.

The DBP of the carbon black is determined in accordance with JIS K 6217-4:2001.

The carbon black may be a product of, for example, Asahi Carbon Co., Ltd., Cabot Japan K.K., Tokai Carbon Co., Ltd., Mitsubishi Chemical Corporation, Lion Corporation, NSCC Carbon Co., Ltd, or Columbia Carbon.

The amount of carbon black per 100 parts by mass of the rubber component is preferably 5 parts by mass or more, more preferably 10 parts by mass or more, still more preferably 20 parts by mass or more, particularly preferably 30 parts by mass or more, most preferably 35 parts by mass or more. An amount of not less than the lower limit tends to provide sufficient reinforcing properties leading to better rubber strength and better wet grip performance. The amount is also preferably 50 parts by mass or less, more preferably 40 parts by mass or less. An amount of not more than the upper limit tends to lead to better fuel economy.

The amount of carbon black based on 100% by mass of the total reinforcing filler is preferably 10% by mass or more, more preferably 20% by mass or more, still more preferably 30% by mass or more, particularly preferably 50% by mass or more, most preferably 60% by mass or more, even most preferably 70% by mass or more, further most preferably 80% by mass or more, particularly most preferably 85% by mass or more, and may be 100% by mass.

The microfibrillated plant fiber is preferably, but not limited to, a cellulose microfibril because it provides good reinforcing properties so that the effects can be more suitably achieved. Preferred examples of the cellulose microfibril include those derived from naturally occurring materials, such as wood, bamboo, hemp, jute, kenaf, crop waste, cloth, recycled pulp, waste paper, bacterial cellulose, and ascidian cellulose.

The microfibrillated plant fiber has high affinity for the triester structure of the glycerol fatty acid triester, and thus reduces the rate of surface bleeding of the glycerol fatty acid triester, thereby resulting in better appearance, fuel economy, and rubber strength (particularly better fuel economy).

The microfibrillated plant fiber may be produced by any method, such as for example by chemically treating the raw material of the cellulose microfibril with sodium hydroxide or other chemicals, and mechanically grinding or beating the treated material using a refiner, a twin screw kneader (twin screw extruder), a twin screw kneading extruder, a high pressure homogenizer, a media agitating mill, a stone mill, a grinder, a vibration mill, a sand grinder, or other machines. This method provides a substantially lignin-free microfibrillated plant fiber since lignin is separated from the raw material by chemical treatment.

The microfibrillated plant fiber preferably has an average fiber diameter of 0.1 μm or smaller, more preferably 0.05 μm or smaller, still more preferably 0.03 μm or smaller. A microfibrillated plant fiber having such a very small average fiber diameter tends to form a suitable network in the rubber, thereby providing good fuel economy while maintaining good rubber strength. The lower limit of the average fiber diameter of the microfibrillated plant fiber is not particularly critical, but is preferably 4 nm or larger because tangles of such microfibrillated plant fibers can readily come loose and disperse.

The microfibrillated plant fiber preferably has an average fiber length of 5 mm or shorter, more preferably 1 mm or shorter, but preferably 0.5 μm or longer, more preferably 1 μm or longer, still more preferably 5 μm or longer, particularly preferably 50 μm or longer, to more suitably achieve the effects.

The average fiber diameter and average fiber length of the microfibrillated plant fiber may be measured by, for example, image analysis of scanning electron micrographs, image analysis of transmission micrographs, X-ray scattering data analysis, or aperture impedance method (Coulter principle).

The microfibrillated plant fiber may be a product of, for example, Daicel FineChem Ltd., Sugino Machine Limited, DKS Co., Ltd., or Nippon Paper Industries Co., Ltd.

The amount of the microfibrillated plant fiber per 100 parts by mass of the rubber component is preferably 1 part by mass or more, more preferably 2 parts by mass or more, but is preferably 20 parts by mass or less, more preferably 15 parts by mass or less, still more preferably 10 parts by mass or less, particularly preferably 8 parts by mass or less, most preferably 7 parts by mass or less. The effects can be more suitably achieved when the amount of the microfibrillated plant fiber is within the range indicated above.

Examples of the silica include dry silica (anhydrous silica) and wet silica (hydrous silica). Wet silica is preferred because it contains a large number of silanol groups.

The silica preferably has a nitrogen adsorption specific surface area ($N_2SA$) of 50 $m^2/g$ or more, more preferably 120 $m^2/g$ or more, still more preferably 150 $m^2/g$ or more. A $N_2SA$ of not less than the lower limit leads to better rubber strength and better wet grip performance. The $N_2SA$ is preferably 400 $m^2/g$ or less, more preferably 200 $m^2/g$ or less, still more preferably 180 $m^2/g$ or less. A $N_2SA$ of not more than the upper limit leads to better fuel economy.

The nitrogen adsorption specific surface area of the silica is measured by the BET method in accordance with ASTM D3037-81.

The silica may be a product of, for example, Degussa, Rhodia, Tosoh Silica Corporation, Solvay Japan, or Tokuyama Corporation.

The amount of silica, if present, per 100 parts by mass of the rubber component is preferably 5 parts by mass or more, more preferably 20 parts by mass or more, still more preferably 30 parts by mass or more, but is preferably 50 parts by mass or less, more preferably 40 parts by mass or less.

In the case where the rubber composition contains silica, it preferably contains a silane coupling agent together with the silica.

Non-limiting examples of the silane coupling agent include sulfide silane coupling agents such as
bis(3-triethoxysilylpropyl)tetrasulfide,
bis(2-triethoxysilylethyl)tetrasulfide,
bis(4-triethoxysilylbutyl)tetrasulfide,
bis(3-trimethoxysilylpropyl)tetrasulfide,
bis(2-trimethoxysilylethyl)tetrasulfide,
bis(2-triethoxysilylethyl)trisulfide,
bis(4-trimethoxysilylbutyl)trisulfide,
bis(3-triethoxysilylpropyl)disulfide,
bis(2-triethoxysilylethyl)disulfide,
bis(4-triethoxysilylbutyl)disulfide,
bis(3-trimethoxysilylpropyl)disulfide,
bis(2-trimethoxysilylethyl)disulfide,
bis(4-trimethoxysilylbutyl)disulfide,
3-trimethoxysilylpropyl-N,N-dimethylthiocarbamoyl-tetrasulfide,
2-triethoxysilylethyl-N,N-dimethylthiocarbamoyl-tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used alone, or two or more of these may be used in combination. Among these, sulfide or mercapto silane coupling agents are preferred to better achieve the effects.

The silane coupling agent may be a product of, for example, Degussa, Momentive, Shin-Etsu Silicone, Tokyo Chemical Industry Co., Ltd., AZmax. Co., or Dow Corning Toray Co., Ltd.

The amount of the silane coupling agent, if present, per 100 parts by mass of silica is preferably 3 parts by mass or more, more preferably 5 parts by mass or more. An amount of not less than 3 parts by mass tends to allow the added silane coupling agent to produce its effect. The amount is also preferably 20 parts by mass or less, more preferably 10 parts by mass or less. An amount of not more than 20 parts by mass tends to lead to an effect commensurate with the added amount, as well as good processability during kneading.

The rubber composition preferably contains a resin to more suitably achieve the effects.

The resin preferably has a glass transition temperature of 40°C or higher, more preferably 60°C or higher, still more preferably 80°C or higher, but preferably 120°C or lower, to more suitably achieve the effects.

The resin preferably has a softening point of 30°C or higher, more preferably 60°C or higher, still more preferably 80°C or higher. A softening point of not less than 30°C tends to lead to better rubber strength and better wet grip performance. The softening point is also preferably 160°C or lower, more preferably 140°C or lower, still more preferably 120°C or lower. A resin having a softening point of not higher than 160°C tends to disperse well, resulting in better rubber strength, wet grip performance, and fuel economy.

Herein, the softening point of the resin is determined as set forth in JIS K 6220-1:2001 with a ring and ball softening point measuring apparatus and is defined as the temperature at which the ball drops down.

Any resin may be used. Examples include styrene resins, coumarone-indene resins, terpene resins, p-t-butylphenol acetylene resins, acrylic resins, dicyclopentadiene resins (DCPD resins), C5 petroleum resins, C9 petroleum resins, and C5/C9 petroleum resins. These resins may be used alone, or two or more of these may be used in combination. To more suitably achieve the effects, C5 petroleum resins are preferred among these.

C5 petroleum resins are produced by polymerizing C5 (carbon number: 5) petroleum hydrocarbons. C5 petroleum hydrocarbons refer to a C5 fraction (fraction with a carbon number of 5) obtained by thermal cracking of naphtha. Specific examples include diolefins such as isoprene, 1,3-pentadiene, dicyclopentadiene, and piperylene; and monoolefins such as 2-methyl-1-butene, 2-methyl-2-butene, and cyclopentene.

Styrene resins refer to polymers produced from styrenic monomers as structural monomers, and examples include polymers produced by polymerizing a styrenic monomer as a main component (50% by mass or more) . Specific examples include: homopolymers produced by polymerizing a styrenic monomer (e.g. styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene) alone; copolymers produced by copolymerizing two or more styrenic monomers; and copolymers of styrenic monomers and additional monomers copolymerizable therewith.

Examples of the additional monomers include acrylonitriles such as acrylonitrile and methacrylonitrile, unsaturated carboxylic acids such as acrylic acid and methacrylic acid, unsaturated carboxylic acid esters such as methyl acrylate and methyl methacrylate, dienes such as chloroprene, butadiene, and isoprene, olefins such as 1-butene and 1-pentene; and $\alpha,\beta$-unsaturated carboxylic acids and acid anhydrides thereof such as maleic anhydride.

In particular, $\alpha$-methylstyrene resins (e.g. $\alpha$-methylstyrene homopolymer, copolymers of $\alpha$-methylstyrene and styrene) are preferred in view of the balance of the properties.

Coumarone-indene resins refer to resins that contain coumarone and indene as monomer components forming the skeleton (backbone) of the resins. Examples of monomer components other than coumarone and indene which may be contained in the skeleton include styrene, $\alpha$-methylstyrene, methylindene, and vinyltoluene.

Examples of the terpene resins include polyterpene, terpene phenol, and aromatic modified terpene resins.

Polyterpene resins refer to resins produced by polymerization of terpene compounds, or hydrogenated products of the resins. The term "terpene compound" refers to a hydrocarbon having a composition represented by $(C_5H_8)_n$ or an oxygen-containing derivative thereof, each of which has a terpene backbone and is classified as a monoterpene ($C_{10}H_{16}$), sesquiterpene ($C_{15}H_{24}$), diterpene ($C_{20}H_{32}$), or other terpenes. Examples of the terpene compound include $\alpha$-pinene, $\beta$-pinene, dipentene, limonene, myrcene, alloocimene, ocimene, $\alpha$-phellandrene, $\alpha$-terpinene, $\gamma$-terpinene, terpinolene, 1,8-cineole, 1,4-cineole, $\alpha$-terpineol, $\beta$-terpineol, and $\gamma$-terpineol.

Examples of the polyterpene resins include terpene resins made from the aforementioned terpene compounds, such as $\alpha$-pinene resin, $\beta$-pinene resin, limonene resin, dipentene resin, and $\beta$-pinene-limonene resin, and hydrogenated terpene resins produced by hydrogenation of the foregoing terpene resins.

Examples of the terpene phenol resins include resins produced by copolymerization of the aforementioned terpene compounds and phenolic compounds; and resins produced by hydrogenation of these resins. Specific examples include resins produced by condensation of the aforementioned terpene compounds, phenolic compounds, and formaldehyde. The phenolic compounds include, for example, phenol, bisphenol A, cresol, and xylenol.

Examples of the aromatic modified terpene resins include resins produced by modifying a terpene resin with an aromatic compound; and resins produced by hydrogenation of these resins . The aromatic compound may be any compound having an aromatic ring, such as: phenol compounds, e.g. phenol, alkylphenols, alkoxyphenols, and unsaturated hydrocarbon group-containing phenols; naphthol compounds, e.g. naphthol, alkylnaphthols, alkoxynaphthols, and unsaturated hydrocarbon group-containing naphthols; styrene and styrene derivatives, e.g. alkylstyrenes, alkoxystyrenes, and unsaturated hydrocarbon group-containing styrenes; and coumarone and indene.

Examples of the p-t-butylphenol acetylene resins include resins produced by condensation of p-t-butylphenol and acetylene.

The acrylic resins are not particularly limited. Solvent-free acrylic resins are suitable because they contain few impurities and have a sharp molecular weight distribution.

Examples of the solvent-free acrylic resins include (meth)acrylic resins (polymers) synthesized by high temperature continuous polymerization processes (high temperature continuous bulk polymerization processes as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45, all of which are incorporated herein by reference) using no or minimal amounts of auxiliary raw materials such as polymerization initiators, chain transfer agents, and organic solvents. Herein, the term "(meth)acrylic" means methacrylic and acrylic.

The acrylic resin is preferably substantially free of auxiliary raw materials such as polymerization initiators, chain transfer agents, and organic solvents. The acrylic resin is also preferably one having a relatively narrow composition distribution or molecular weight distribution, produced by continuous polymerization.

As described above, the acrylic resin is preferably one which is substantially free of auxiliary raw materials such as polymerization initiators, chain transfer agents, and organic solvents, namely, which is of high purity. The acrylic resin preferably has a purity (resin content in the resin) of 95% by mass or more, more preferably 97% by mass or more.

Examples of the monomer component of the acrylic resin include (meth) acrylic acid and (meth) acrylic acid derivatives such as (meth)acrylic acid esters (e.g., alkyl esters, aryl esters, aralkyl esters), (meth)acrylamide, and (meth)acrylamide derivatives.

In addition to such (meth)acrylic acid or (meth)acrylic acid derivatives, aromatic vinyls such as styrene, $\alpha$-methylstyrene, vinyltoluene, vinylnaphthalene, divinylbenzene, trivinylbenzene, or divinylnaphthalene may be used as monomer components for forming the acrylic resin.

The acrylic resin may be formed only of the (meth) acrylic component or may further contain constituent components other than the (meth)acrylic component.

The acrylic resin may also contain a hydroxyl group, a carboxyl group, a silanol group, or the like.

The resin (e.g. a styrene resin or coumarone-indene resin) may be a product of, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX Energy Corporation, Arakawa Chemical Industries, Ltd., or Taoka Chemical Co., Ltd.

The amount of the resin, if present, per 100 parts by mass of the rubber component is preferably 1 part by

mass or more, more preferably 2 parts by mass or more, but is preferably 50 parts by mass or less, more preferably 30 parts by mass or less, still more preferably 20 parts by mass or less, particularly preferably 10 parts by mass or less. When the amount is within the range indicated above, the effects can be more suitably achieved.

The rubber composition preferably contains an antioxidant.

Examples of the antioxidant include: naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2, 6-di-t-butyl-4-methylphenol and styrenated phenol; and bis-, tris-, or polyphenolic antioxidants such as tetrakis-[methylene-3-(3',5'-di-t-butyl-4'-hydroxyphenyl)-propionate]methane. These antioxidants may be used alone, or two or more of these may be used in combination. Among these, p-phenylenediamine antioxidants or quinoline antioxidants are preferred, with N-(1,3-dimethylbutyl)-N'-phenyl-p-phenylenediamine or 2,2,4-trimethyl-1,2-dihydroquinoline polymer being more preferred.

The antioxidant may be a product of, for example, Seiko Chemical Co., Ltd., Sumitomo Chemical Co., Ltd., Ouchi Shinko Chemical Industrial Co., Ltd., or Flexsys.

The amount of the antioxidant, if present, per 100 parts by mass of the rubber component is preferably 1 part by mass or more, more preferably 2 parts by mass or more, but is preferably 10 parts by mass or less, more preferably 7 parts by mass or less.

The rubber composition preferably contains stearic acid.

The stearic acid may be a conventional one, and examples include products of NOF Corporation, Kao Corporation, Wako Pure Chemical Industries, Ltd., and Chiba Fatty Acid Co., Ltd.

The amount of stearic acid, if present, per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the effects tend to be well achieved.

The rubber composition preferably contains zinc oxide.

The zinc oxide may be a conventional one, and examples include products of Mitsui Mining & Smelting Co., Ltd., Toho Zinc Co., Ltd., HakusuiTech Co., Ltd., Seido Chemical Industry Co., Ltd. and Sakai Chemical Industry Co., Ltd.

The amount of zinc oxide, if present, per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the effects tend to be better achieved.

The rubber composition preferably contains sulfur.

Examples of the sulfur include those used commonly in the rubber industry, such as powdered sulfur, precipitated sulfur, colloidal sulfur, insoluble sulfur, highly dispersible sulfur, and soluble sulfur. These types of sulfur may be used alone, or two or more of these may be used in combination.

The sulfur may be a product of, for example, Tsurumi Chemical Industry Co., Ltd., Karuizawa sulfur Co., Ltd., Shikoku Chemicals Corporation, Flexsys, Nippon Kanryu Industry Co., Ltd., or Hosoi Chemical Industry Co., Ltd.

The amount of sulfur, if present, per 100 parts by mass of the rubber component is preferably 0.5 parts by mass or more, more preferably 0.8 parts by mass or more, but is preferably 10 parts by mass or less, more preferably 5 parts by mass or less, still more preferably 3 parts by mass or less. When the amount is within the range indicated above, the effects tend to be well achieved.

The rubber composition preferably contains a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazolesulfenamide, N-t-butyl-2-benzothiazolylsulfenamide, N-oxyethylene-2-benzothiazolesulfenamide, and N,N'-diisopropyl-2-benzothiazolesulfenamide; and guanidine vulcanization accelerators such as diphenylguanidine, diorthotolylguanidine, and orthotolylbiguanidine. These vulcanization accelerators may be used alone, or two or more of these may be used in combination. Among these, sulfenamide vulcanization accelerators or guanidine vulcanization accelerators are preferred to more suitably achieve the effects.

The amount of the vulcanization accelerator, if present, per 100 parts by mass of the rubber component is preferably 1 part by mass or more, more preferably 2 parts by mass or more, but is preferably 10 parts by mass or less, more preferably 7 parts by mass or less. When the amount is within the range indicated above, the effects tend to be well achieved.

The rubber composition preferably contains a wax.

Non-limiting examples of the wax include petroleum waxes such as paraffin wax and microcrystalline wax; naturally occurring waxes such as plant and animal waxes; and synthetic waxes such as polymers of ethylene, propylene, or the like. These waxes may be used alone, or two or more of these may be used in combination.

The wax may be a product of, for example, Ouchi Shinko Chemical Industrial Co., Ltd., Nippon Seiro Co., Ltd., or Seiko Chemical Co., Ltd.

The amount of the wax, if present, per 100 parts by mass of the rubber component is preferably 0.5 parts by mass or more, more preferably 1 part by mass or more, but is preferably 10 parts by mass or less, more preferably 7 parts by mass or less.

In addition to the above-described components, the rubber composition may contain additives commonly used in the tire industry, such as vulcanizing agents other than sulfur (e.g., organic crosslinking agents, organic peroxides).

The rubber composition may be prepared by conventional methods. Specifically, the rubber composition may be prepared, for example, by kneading the components using a Banbury mixer, a kneader, an open roll mill, or other kneading machines, and then vulcanizing the kneaded mixture.

The kneading conditions when additives other than vulcanizing agents and vulcanization accelerators are added include a kneading temperature of usually 50 to 200°C, preferably 80 to 190°C and a kneading duration of usually 30 seconds to 30 minutes, preferably one minute to 30 minutes.

When a vulcanizing agent and/or a vulcanization accelerator are/is added, the kneading temperature is usually 100°C or lower, and preferably ranges from room temperature to 80°C. The rubber composition containing a vulcanizing agent and/or a vulcanization accelerator is usually vulcanized by, for example, press vulcanization. The vulcanization temperature is usually 120 to 200°C, preferably 140 to 180°C.

The (vulcanized) rubber composition preferably exhibits the maximum loss tangent (tan $\delta$) at a temperature (T) of -46°C or lower, more preferably at -50°C or lower, still more preferably at -54°C or lower, in a temperature dependence curve of tan $\delta$ measured at a strain amplitude of $\pm$0.25%. Such a rubber composition provides better fuel economy, probably because of the following reason.

Ester compounds usually have lower glass transition temperatures than petroleum-derived plasticizers. Thus, the rubber composition containing the glycerol fatty acid triester shows a lower temperature (T) than that containing a petroleum-derived plasticizer leading to reduced energy loss. The reduced temperature (T) also allows the rubber composition to have a lower temperature dependence of energy loss and therefore to maintain low energy loss even at low temperatures.

The lower limit of the temperature (T) is not particularly critical, but is preferably -80°C or higher, more preferably -70°C or higher, still more preferably -60°C or higher, to obtain good rubber strength.

The temperature (T) is measured as described later in EXAMPLES.

The temperature (T) may usually be increased by adding resins, styrene butadiene rubber, polyisoprene rubber, or the like used in rubber compositions.

The temperature (T) may be reduced by adding plasticizers such as ester or ether compounds.

The (vulcanized) rubber composition preferably has a ratio of the loss tangent (tan $\delta$ at 20°C) measured at 20°C and a strain amplitude of +0.25% to the loss tangent (tan $\delta$ at 0°C) measured at 0°C and a strain amplitude of $\pm$0.25% that satisfies relationship (X) below. Such a rubber composition has smaller differences between the rolling resistance at normal temperature and that at low temperatures and therefore a lower temperature dependence of fuel economy, which means that the deterioration of fuel economy is reduced even in cold winter, and thus the rubber composition can be suitably used as a rubber composition for fuel efficient tires.

The lower limit in relationship (X) is preferably 0.82 or higher, more preferably 0.85 or higher, particularly preferably 0.90 or higher. The upper limit in relationship (X) is not particularly critical, but is preferably 0.95 or lower, more preferably 0.92 or lower, to obtain good fuel economy, particularly in summer.

$$(X):\ \tan\delta \text{ at } 20^\circ C/\tan\delta \text{ at } 0^\circ C \geq 0.80$$

The tan $\delta$ at 20°C and tan $\delta$ at 0°C are measured as described later in EXAMPLES.

The ratio of tan $\delta$ at 20°C/tan $\delta$ at 0°C may be increased by adding plant oils (glycerol fatty acid triesters) to fall within the above range. The ratio of tan $\delta$ at 20°C/tan $\delta$ at 0°C may be reduced by adding rubbers having a glass transition temperature of -60°C or lower such as polybutadiene rubber.

The rubber composition may be used for, for example, tires, footwear soles, industrial belts, packings, seismic isolators, or medical stoppers, and suitably for tires.

The rubber composition is suitable for sidewalls but may also be used in tire components other than sidewalls, such as treads (cap treads), base treads, undertreads, clinch apexes, bead apexes, breaker cushion rubbers, carcass cord topping rubbers, insulations, chafers, and innerliners, or in side reinforcing layers of run-flat tires.

The pneumatic tire of the present invention may be formed from the rubber composition by conventional methods.

Specifically, the unvulcanized rubber composition containing the components may be extruded into the shape of a tire component such as a sidewall, assembled with other tire components on a tire building machine in a usual

manner to build an unvulcanized tire, which is then heated and pressurized in a vulcanizer to produce a tire.

The pneumatic tire may be suitably used as a tire for passenger vehicles, large passenger vehicles, large SUVs, heavy load vehicles such as trucks and buses, light trucks, or motorcycles, or as a run-flat tire, a racing tire, or a cold weather tire. It is especially suitable as a tire for passenger vehicles.

EXAMPLES

The present invention is specifically described with reference to examples, but not limited thereto.

The chemicals used in production examples are listed below.

Ion-exchanged water: an in-house product
Potassium rosinate soap: a product of Harima Chemicals Group, Inc.
Fatty acid sodium soap: a product of Wako Pure Chemical Industries, Ltd.
Potassium chloride: a product of Wako Pure Chemical Industries, Ltd.
Sodium naphthalene sulfonate-formaldehyde condensate: a product of Kao Corporation
Styrene: styrene available from Wako Pure Chemical Industries, Ltd.
1,3-Butadiene: 1,3-butadiene available from Takachiho Trading Co., Ltd.
t-Dodecyl mercaptan: tert-dodecyl mercaptan (chain transfer agent) available from Wako Pure Chemical Industries, Ltd.
Sodium hydrosulfide: a product of Wako Pure Chemical Industries, Ltd.
$FeSO_4$: ferric sulfate available from Wako Pure Chemical Industries, Ltd.
EDTA: sodium ethylenediaminetetraacetate available from Wako Pure Chemical Industries, Ltd.
Rongalite: sodium formaldehyde sulfoxylate available from Wako Pure Chemical Industries, Ltd.
Polymerization initiator: paramenthane hydroperoxide available from NOF Corporation
Polymerization terminator: N,N-diethylhydroxylamine available from Wako Pure Chemical Industries, Ltd.
2,6-Di-t-butyl-p-cresol: Sumilizer BHT available from Sumitomo Chemical Co., Ltd.
Dibutyl itaconate (IDB): a product of Tokyo Chemical Industry Co., Ltd.

(Preparation of emulsifier)

An emulsifier was prepared by adding 9,356 g of ion-exchanged water, 1,152 g of potassium rosinate soap, 331 g of fatty acid sodium soap, 51 g of potassium chloride, and 30 g of sodium naphthalene sulfonate-formaldehyde condensate, followed by stirring at 70°C for two hours.

(Production Example 1)

A 50 L (interior volume) stainless steel polymerization reactor was cleaned, dried, and purged with dry nitrogen. Then, the reactor was charged with 4,650 g of 1,3-butadiene, 350 g of dibutyl itaconate (IDB), 5.74 g of t-dodecyl mercaptan, 9,688 g of the emulsifier, 6.3 mL of sodium hydrosulfide (1.8 M), 6.3 mL each of the activators ($FeSO_4$/EDTA/Rongalite), and 6.3 mL of the polymerization initiator (2.3 M), followed by polymerization at 10°C for three hours with stirring. After the completion of the polymerization, 2.9 g of N,N-diethylhydroxylamine was added to the reaction mixture and they were reacted for 30 minutes. The contents were taken out from the polymerization reactor and combined with 10 g of 2,6-di-t-butyl-p-cresol. After most of the water was evaporated off, the residue was dried under reduced pressure at 55°C for 12 hours to obtain copolymer 1.

(Production Example 2)

Copolymer 2 was prepared as in Production Example 1, except that 4,650 g of 1,3-butadiene and 350 g of dibutyl itaconate (IDB) used in Production Example 1 were replaced with 4,300 g of 1,3-butadiene and 700 g of diethyl itaconate (IDE), respectively.

Table 1 shows the amounts of butadiene (conjugated diene monomer), diethyl itaconate, dibutyl itaconate (compound of Formula (1)), and styrene (compound of Formula (2)), Mw, Mw/Mn, Tg, and Mooney viscosity of the copolymers prepared in the production examples. The methods for measuring them are described sequentially below.

(Amounts of monomer units)

A $^1$H-NMR spectrum was measured at 23°C using an NMR spectrometer (Bruker) . This spectrum was used to calculate the ratio of the peaks from the phenyl protons of the styrene unit at 6.5 to 7.2 ppm, the vinyl protons of the

butadiene unit at 4.9 to 5.4 ppm, and the diethyl itaconate or dibutyl itaconate unit at 3.9 to 4.2 ppm. The amounts of the monomer units were determined from the ratio.

(Measurement of weight average molecular weight (Mw) and number average molecular weight (Mn))

The weight average molecular weight (Mw) and number average molecular weight (Mn) of each copolymer were determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

(Measurement of glass transition temperature (Tg))

The glass transition temperature (Tg) was defined as the glass transition onset temperature measured using a differential scanning calorimeter (Q200, TA Instruments, Japan) at a rate of temperature increase of 10°C/min in accordance with JIS K 7121.

(Mooney viscosity ($ML_{1+4}$, 130°C))

After preheating at 130°C for one minute, each copolymer was measured for Mooney viscosity ($ML_{1+4}$, 130°C) for four minutes using a Mooney viscometer (SMV-200, Shimadzu Corporation) in accordance with JIS K 6300.

[Table 1]

| Copolymer | 1 | 2 |
|---|---|---|
| Amount of butadiene (conjugated diene monomer) (% by mass) | 90 | 80 |
| Amount of diethyl itaconate or dibutyl itaconate (Formula (1)) (% by mass) | 10 | 20 |
| Amount of styrene (Formula (2)) (% by mass) | - | - |
| Weight average molecular weight (Mw) | 840,000 | 800,000 |
| Molecular weight distribution (Mw/Mn) | 2.8 | 3.1 |
| Tg (°C) | -66 | -74 |
| Mooney viscosity ($ML_{1+4}$, 130°C) | 40 | 47 |

The chemicals used in the examples and comparative examples were listed below.

NR: RSS#3
BR: high cis BR (cis content: 97% by mass, Mw: 400,000)
Copolymers 1 and 2: the copolymers prepared in Production Examples 1 and 2
Carbon black: Seast NH ($N_2SA$: 74 $m^2/g$, DBP: 127 mL/100g) available from Tokai Carbon Co., Ltd.
CNF: CELISH KY-100G (cellulose microfibril, average fiber length: 0.5 mm, average fiber diameter: 0.02 pm, solid content: 10% by mass) available from Daicel Finechem Ltd. (The amounts of CNF indicated in Table 3 are the amounts of solids.)
Silica: ZEOSIL 1115MP ($N_2SA$: 115 $m^2/g$) available from Rhodia
Silane coupling agent: Si75 (bis(3-triethoxysilylpropyl)disulfide) available from Degussa
Process oil: Process X-140 (aromatic oil) available from Japan Energy Corporation
Glycerol fatty acid triesters 1 to 6: plant oils available from The Nisshin Oillio Group, Ltd. (The properties are shown in Table 2. The fatty acid contents indicated in Table 2 mean the contents (% by mass) of the fatty acids each based on 100% by mass of the constituent fatty acids.)
Resin: MARUKAREZ T-100AS (C5 aliphatic petroleum resin, softening point: 100°C) available from Maruzen Petrochemical Co., Ltd.
Zinc oxide: zinc oxide #2 available from Mitsui Mining & Smelting Co., Ltd.
Stearic acid: stearic acid "TSUBAKI" available from NOF Corporation
Antioxidant: Santoflex 13 (N-(1,3-dimethylbutyl)-N'-phenyl-p-phenylenediamine) available from Flexsys
Sulfur: powdered sulfur available from Tsurumi Chemical Industry Co., Ltd.
Vulcanization accelerator 1: NOCCELER NS (N-tert-butyl-2-benzothiazolylsulfenamide) available from Ouchi Shinko Chemical Industrial Co., Ltd.

Vulcanization accelerator 2: NOCCELER D (diphenylguanidine) available from Ouchi Shinko Chemical Industrial Co., Ltd.

[Table 2]

| | Origin | Content of fatty acids having one unsaturated bond | Content of fatty acids having two unsaturated bonds | Content of fatty acids having three unsaturated bonds | Content of fatty acids having two or more unsaturated bonds | Content of fatty acids having unsaturated bonds | Content of saturated fatty acids | Value of relationship (A) | Average carbon number of constituent fatty acids | Melting point (°C) | Iodine number |
|---|---|---|---|---|---|---|---|---|---|---|---|
| Glycerol fatty acid triester 1 | Rapeseed | 63 | 19 | 9 | 28 | 91 | 9 | 128 | 18.0 | -8 | 108 |
| Glycerol fatty acid triester 2 | Sunflower | 79 | 13 | 0 | 13 | 92 | 8 | 105 | 18.0 | -5 | 95 |
| Glycerol fatty acid triester 3 | Soybean | 23 | 54 | 10 | 64 | 87 | 13 | 161 | 17.8 | -8 | 132 |
| Glycerol fatty acid triester 4 | Sesame | 39 | 45 | 0 | 45 | 84 | 16 | 129 | 17.8 | -4 | 112 |
| Glycerol fatty acid triester 5 | Rice | 43 | 36 | 1 | 37 | 80 | 20 | 118 | 17.7 | -10 | 103 |
| Glycerol fatty acid triester 6 | Palm | 40 | 12 | 0 | 12 | 52 | 48 | 64 | 17.0 | 34 | 52 |

<Examples and Comparative Examples>

According to each of the formulations indicated in Table 3, the chemicals other than the sulfur and vulcanization accelerators were kneaded in a Banbury mixer for four minutes to give a kneaded mixture. Next, the kneaded mixture was kneaded with the sulfur and vulcanization accelerators for four minutes using an open roll mill to obtain an unvulcanized rubber composition. Then, the unvulcanized rubber composition was press-vulcanized at 170°C for 12 minutes to obtain a vulcanized rubber composition.

Separately, the unvulcanized rubber composition was formed into a sidewall shape and assembled with other tire components to build an unvulcanized tire. The unvulcanized tire was pressurized and heated at 170°C for 20 minutes to prepare a test tire (size: 195/65R15). The vulcanized rubber compositions and test tires prepared as above were evaluated for the following properties. Table 3 shows the results.

(tan δ at 20°C/tan δ at 0°C)

The tan δ of each vulcanized rubber composition was measured using a spectrometer (Ueshima Seisakusho Co., Ltd.) at an initial strain of 10%, a dynamic strain amplitude of 0.25%, a frequency of 10 Hz, and temperatures of 20°C and 0°C. The measured values were substituted into the equation (X) : tan δ at 20°C/tan δ at 0°C to determine the value of equation (X). A higher value indicates smaller differences between the rolling resistance at normal temperature and that at low temperatures and therefore a lower temperature dependence of fuel economy, which means that the deterioration of fuel economy is reduced even in cold winter, and thus the rubber composition can be suitably used as a rubber composition for fuel efficient tires.

(Temperature (T))

A temperature dependence curve of tan δ of the obtained vulcanized rubber composition was measured over a temperature range from -120 to 70°C using a spectrometer (Ueshima Seisakusho Co., Ltd.) at an initial strain of 10%, a dynamic strain amplitude of 0.25%, a frequency of 10 Hz, and a rate of temperature increase of 2°C/min. Then, the temperature (T) at which tan δ reached the maximum was determined.

(Appearance rating)

The test tires were left outside under a roof to avoid rain for 60 days, and then visually observed and rated based on the following criteria.

A: Black color retained with almost no discoloration
B: Black color partially faded, but without significant discoloration
C: Appearance spoiled by local discoloration
D: Appearance significantly spoiled by clear discoloration

These criteria mean that the appearance of the tires and the retention of the blackness of the tires, and therefore the appearance quality improve in the following order: D < C < B < A.

(Rubber strength index)

The obtained vulcanized rubber compositions were subjected to a tensile test in accordance with JIS K 6251 to measure the tensile strength at break (TB) and elongation at break (EB). The measured values were substituted into the equation: TB × EB/2 to determine the breaking energy. The breaking energies of the rubber compositions are expressed as an index, with Comparative Example 1 set equal to 100. A higher index indicates higher breaking energy and therefore higher rubber strength.

(Fuel economy index)

The tan δ of each vulcanized rubber composition was measured at an initial strain of 10%, a dynamic strain amplitude of 0.25%, a frequency of 10 Hz, and a temperature of 50°C using a spectrometer available from Ueshima Seisakusho Co., Ltd. The reciprocals of the tan δ values are expressed as an index, with Comparative Example 1 set equal to 100. A higher index indicates a lower rolling resistance and therefore better fuel economy.

[Table 3]

| | | Comp. Ex. 1 | Comp. Ex. 2 | Comp. Ex. 3 | Comp. Ex. 4 | Ex. 1* | Ex. 2* | Ex. 3* | Comp. Ex. 5 | Ex. 4* | Ex. 5* | Ex. 6* | Ex. 7* | Ex. 8* | Ex. 9* | Ex. 10 | Comp. Ex. 6 | Comp. Ex. 7 |
|---|---|---|---|---|---|---|---|---|---|---|---|---|---|---|---|---|---|---|
| Formulation (parts by mass) | NR | 50 | 50 | 50 | 50 | 50 | 50 | 50 | 50 | 50 | 50 | 50 | 40 | 40 | 50 | 50 | | |
| | BR | 50 | 50 | 50 | 50 | 50 | 50 | 50 | 50 | 50 | 50 | 50 | 50 | 50 | 50 | 50 | 100 | 100 |
| | Copolymer 1 | | | | | | | | | | | | 10 | | | | | |
| | Copolymer 2 | | | | | | | | | | | | | 10 | | | | |
| | Carbon black | 50 | 50 | 5 | 50 | 50 | 50 | 50 | 50 | 50 | 50 | 50 | 50 | 50 | 40 | 45 | 50 | 50 |
| | CNF | | | | | | | | | | | | | | | 5 | | |
| | Silica | | | 45 | | | | | | | | | | | | | | |
| | Silane coupling agent | | | 3.6 | | | | | | | | | | | | | | |
| | Process oil | 20 | | 20 | | | | | | 20 | 22 | | | | | | 20 | |
| | Glycerol fatty acid triester 1 | | 20 | | | | | | | | | | | | | | | |
| | Glycerol fatty acid triester 2 | | | | 20 | | | | | | | | | | | | | |
| | Glycerol fatty acid triester 3 | | | | | 20 | | | | 2 | 10 | 25 | 20 | 20 | 20 | 20 | | 20 |
| | Glycerol fatty acid triester 4 | | | | | | 20 | | | | | | | | | | | |
| | Glycerol fatty acid triester 5 | | | | | | | 20 | | | | | | | | | | |
| | Glycerol fatty acid triester 6 | | | | | | | | 20 | | | | | | | | | |
| | Resin | 4 | 4 | 4 | 4 | 4 | 4 | 4 | 4 | 2 | 2 | 4 | 4 | 4 | 4 | 4 | 4 | 4 |
| | Zinc oxide | 2 | 2 | 2 | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 | 2 | 2 | 2 | 2 | 2 | 2 | 2 | 2 | 2 |
| | Vulcanization accelerator 2 | | | 1 | | | | | | | | | | | | | | |
| | Plasticizer content/Reinforcing filler content | 0.40 | 0.40 | 0.40 | 0.40 | 0.40 | 0.40 | 0.40 | 0.40 | 0.44 | 0.64 | 0.50 | 0.40 | 0.40 | 0.50 | 0.40 | 0.40 | 0.40 |
| Evaluation results | tan δ at 20°C/tan δ at 0°C | 0.84 | 0.88 | 0.89 | 0.90 | 0.90 | 0.90 | 0.89 | 0.84 | 0.89 | 0.86 | 0.88 | 0.87 | 0.87 | 0.85 | 0.90 | 0.93 | 0.94 |
| | Temperature (T)/°C | -43 | -50 | -49 | -50 | -50 | -48 | -49 | -44 | -46 | -47 | -52 | -52 | -54 | -50 | -50 | -82 | -84 |
| | Appearance rating | B | C | C | C | B | B | B | D | B | A | B | A | A | B | B | B | C |
| | Rubber strength index | 100 | 102 | 97 | 97 | 106 | 105 | 104 | 88 | 100 | 107 | 101 | 111 | 111 | 101 | 105 | 38 | 37 |
| | Fuel economy index | 100 | 105 | 106 | 102 | 106 | 105 | 104 | 97 | 104 | 105 | 106 | 108 | 110 | 112 | 110 | 93 | 95 |

*Example useful for understanding the invention

As shown in Table 3, good fuel economy and good rubber strength were exhibited while maintaining good appearance in the examples containing: a rubber component including a diene rubber; a reinforcing filler; and a glycerol fatty acid triester of plant origin, wherein the diene rubber included an isoprene-based rubber, the glycerol fatty acid triester had a content of saturated fatty acids of 10 to 25% by mass and a content of monovalent unsaturated fatty acids having one unsaturated bond of less than 50% by mass, each based on 100% by mass of the constituent fatty acids of the triester, and the reinforcing filler was present in an amount of 50 parts by mass or less per 100 parts by mass of the rubber component.

Comparison between Example 1 and Comparative Examples 1, 6, and 7 demonstrated that the use of a combination of an isoprene-based rubber and a specific glycerol fatty acid triester synergistically improves fuel economy and rubber strength.

Provided are a rubber composition having good fuel economy and good rubber strength while maintaining good appearance, and a pneumatic tire formed from the rubber composition. The rubber composition contains: a rubber component including a diene rubber; a reinforcing filler; and a glycerol fatty acid triester of plant origin. The diene rubber includes an isoprene-based rubber. The glycerol fatty acid triester has a content of saturated fatty acids of 10 to 25% by mass and a content of monovalent unsaturated fatty acids having one unsaturated bond of less than 50% by mass, each based on 100% by mass of the constituent fatty acids of the triester. The reinforcing filler is present in an amount of 50 parts by mass or less per 100 parts by mass of the rubber component and includes carbon black and microfibrillated plant fiber.

## Claims

**1.** A rubber composition, comprising:

a rubber component including a diene rubber;
a reinforcing filler; and
a glycerol fatty acid triester of plant origin,
the diene rubber including an isoprene-based rubber,
the glycerol fatty acid triester having a content of saturated fatty acids of 10 to 25% by mass and a content of monovalent unsaturated fatty acids having one unsaturated bond of less than 50% by mass, each based on 100% by mass of constituent fatty acids of the triester,
the reinforcing filler being present in an amount of 50 parts by mass or less per 100 parts by mass of the rubber component, **characterized in that**
the reinforcing filler includes carbon black and a microfibrillated plant fiber.

**2.** The rubber composition according to claim 1,
wherein the glycerol fatty acid triester has a content of polyvalent unsaturated fatty acids having two or more unsaturated bonds of 50% by mass or more based on 100% by mass of the constituent fatty acids.

**3.** The rubber composition according to claim 1 or 2,
wherein the glycerol fatty acid triester satisfies the following relationship (A):

80 ≤ the content (% by mass) of monovalent unsaturated fatty acids having one unsaturated bond based on 100% by mass of the constituent fatty acids × 1 (the number of unsaturated bonds) + the content (% by mass) of divalent unsaturated fatty acids having two unsaturated bonds based on 100% by mass of the constituent fatty acids × 2 (the number of unsaturated bonds) + the content (% by mass) of trivalent unsaturated fatty acids having three unsaturated bonds based on 100% by mass of the constituent fatty acids × 3 (the number of unsaturated bonds) ≤ 200.

**4.** The rubber composition according to any one of claims 1 to 3,

wherein the rubber composition comprises 2 to 20 parts by mass of the glycerol fatty acid triester per 100 parts by mass of the rubber component.

5. The rubber composition according to any one of claims 1 to 4, wherein the rubber component includes, based on 100% by mass thereof, at least 5% by mass of a copolymer, the copolymer being synthesized by copolymerizing a conjugated diene monomer with a compound represented by the following Formula (1):

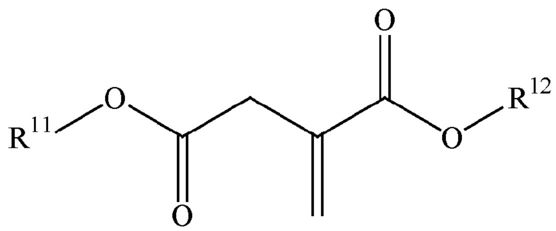

(1)

wherein $R^{11}$ and $R^{12}$ are the same or different and each denote a hydrogen atom or a C1-C30 hydrocarbon group.

6. The rubber composition according to claim 5, wherein the copolymer comprises, based on 100% by mass of structural units thereof, 5 to 95% by mass of units derived from the conjugated diene monomer and 5 to 95% by mass of units derived from the compound of Formula (1).

7. The rubber composition according to any one of claims 1 to 6, wherein the rubber composition exhibits the maximum loss tangent (tan δ) at -46°C or lower in a temperature dependence curve of tan δ measured at a strain amplitude of ±0.25%, and has a ratio of a loss tangent (tan δ at 20°C) measured at 20°C and a strain amplitude of ±0.25% to a loss tangent (tan δ at 0°C) measured at 0°C and a strain amplitude of ±0.25% that satisfies the following relationship (X):

$$\tan\delta \text{ at } 20°C / \tan\delta \text{ at } 0°C \geq 0.80.$$

8. The rubber composition according to any one of claims 1 to 7, which is a rubber composition for tires.

9. A pneumatic tire, comprising a sidewall formed from the rubber composition according to any one of claims 1 to 7.

**Patentansprüche**

1. Kautschukzusammensetzung, umfassend:

   einen Kautschukbestandteil, der einen Dienkautschuk beinhaltet;
   einen verstärkenden Füllstoff; und
   einen Glycerolfettsäuretriester mit pflanzlichem Ursprung,
   der Dienkautschuk beinhaltet einen Isopren-basierten Kautschuk,
   der Glycerolfettsäuretriester weist einen Gehalt an gesättigten Fettsäuren von 10 bis 25 Massen-% und einen Gehalt an einwertigen ungesättigten Fettsäuren, die eine ungesättigte Bindung aufweisen, von weniger als 50 Massen-% auf, jeweils basierend auf 100 Massen-% der konstituierenden Fettsäuren des Triesters,
   der verstärkende Füllstoff ist in einer Menge von 50 Massenteilen oder weniger pro 100 Massenteilen des Kautschukbestandteils vorhanden, **dadurch gekennzeichnet, dass**
   der verstärkende Füllstoff Ruß und eine mikrofibrillierte Pflanzenfaser beinhaltet.

2. Kautschukzusammensetzung nach Anspruch 1, wobei der Glycerolfettsäuretriester einen Gehalt an mehrwertigen ungesättigten Fettsäuren, die zwei oder mehrere ungesättigte Bindungen aufweisen, von 50 Massen-% oder mehr, basierend auf 100 Massen-% der konstituierenden Fettsäuren, aufweist.

3. Kautschukzusammensetzung nach Anspruch 1 oder 2, wobei der Glycerolfettsäuretriester die folgende Beziehung (A) erfüllt:

80 ≤ der Gehalt (Massen-%) von einwertigen ungesättigten Fettsäuren, die eine ungesättigte Bindung aufweisen, basierend auf 100 Massen-% der konstituierenden Fettsäuren, × 1 (die Anzahl der ungesättigten Bindungen) + der Gehalt (Massen-%) von zweiwertigen ungesättigten Fettsäuren, die zwei ungesättigte Bindungen aufweisen, basierend auf 100 Massen-% der konstituierenden Fettsäuren, × 2 (Anzahl der ungesättigten Bindungen) + der Gehalt (Massen-%) von dreiwertigen ungesättigten Fettsäuren, die drei ungesättigte Bindungen aufweisen, basierend auf 100 Massen-% der konstituierenden Fettsäuren, × 3 (Anzahl der ungesättigten Bindungen) ≤ 200.

4. Kautschukzusammensetzung nach einem der Ansprüche 1 bis 3, wobei die Kautschukzusammensetzung 2 bis 20 Massenteile des Glycerolfettsäuretriesters pro 100 Massenteile des Kautschukbestandteils umfasst.

5. Kautschukzusammensetzung nach einem der Ansprüche 1 bis 4, wobei die Kautschukzusammensetzung, basierend auf 100 Massen-% davon, wenigstens 5 Massen-% eines Copolymers beinhaltet, das Copolymer wird durch Copolymerisieren eines konjugierten Dienmonomers mit einer durch die folgende Formel (1) dargestellten Verbindung synthetisiert:

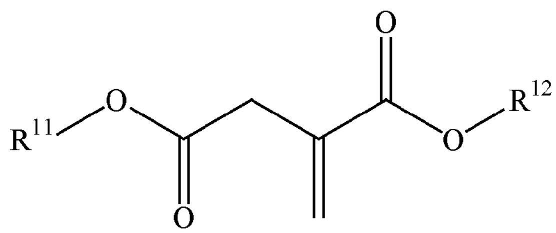

(1)

wobei $R^{11}$ und $R^{12}$ die gleichen oder unterschiedlich sind und jeweils ein Wasserstoffatom oder eine C1-C30-Kohlenwasserstoffgruppe bezeichnen.

6. Kautschukzusammensetzung nach Anspruch 5, wobei das Copolymer, basierend auf 100 Massen-% der Struktureinheiten davon, 5 bis 95 Massen-% von Einheiten umfasst, die aus dem konjugierten Dienmonomer stammen und 5 bis 95 Massen-% an Einheiten, die aus der Verbindung der Formel (1) stammen.

7. Kautschukzusammensetzung nach einem der Ansprüche 1 bis 6, wobei die Kautschukzusammensetzung den maximalen Verlusttangens (tan δ) in einer Temperaturabhängigkeitskurve des tan δ gemessen bei einer Verformungsamplitude von ±0,25% bei -46°C oder niedriger, aufweist, und ein Verhältnis eines Verlusttangens (tan δ bei 20°C), gemessen bei 20°C und einer Verformungsamplitude von ±0,25%, zu einem Verlusttangens (tan δ bei 0°C), gemessen bei 0°C und eine Verformungsamplitude von ±0,25%, aufweist, die die folgende Beziehung (X) erfüllen:

$$\tan \delta \text{ bei } 20°C / \tan \delta \text{ bei } 0°C \geq 0{,}80.$$

8. Kautschukzusammensetzung nach einem der Ansprüche 1 bis 7, welche eine Kautschukzusammensetzung für Reifen ist.

9. Luftreifen, der eine Seitenwand umfasst, die aus der Kautschukzusammensetzung nach einem der Ansprüche 1 bis 7 gebildet ist.

**Revendications**

1. Composition de caoutchouc comprenant :

un composant caoutchouc contenant un caoutchouc de diène ;
une charge de renforcement ; et
un triester d'acides gras et de glycérol d'origine végétale,
le caoutchouc de diène contenant un caoutchouc à base d'isoprène,
le triester d'acides gras et de glycérol ayant une teneur en acides gras saturés de 10 à 25 % en masse et une teneur en acides gras insaturés monovalents ayant une seule liaison insaturée inférieure à 50 % en masse, à chaque fois pour 100 % en masse des acides gras constitutifs du triester,
la charge de renforcement étant présente en une quantité de 50 parties en masse ou moins pour 100 parties en masse du composant caoutchouc,
**caractérisée en ce que** la charge de renforcement contient du noir de carbone et des fibres végétales microfibrillées.

2. Composition de caoutchouc selon la revendication 1, dans laquelle le triester d'acides gras et de glycérol a une teneur en acides gras insaturés polyvalents ayant deux ou plus de deux liaisons insaturées de 50 % en masse ou plus pour 100 % en masse des acides gras constitutifs.

3. Composition de caoutchouc selon la revendication 1 ou 2, dans laquelle le triester d'acides gras et de glycérol satisfait à la relation (A) suivante :

80 $\leq$ teneur (en % en masse) en acides gras insaturés monovalents ayant une seule liaison insaturée pour 100 % en masse des acides gras constitutifs × 1 (nombre de liaisons insaturées) + teneur (% en poids) d'acides gras insaturés divalents ayant deux liaisons insaturées pour 100 % en masse des acides gras constitutifs × 2 (nombre de liaisons insaturées) + teneur (% en masse) en acides gras insaturés trivalents ayant trois liaisons insaturées pour 100 % en masse des acides gras constitutifs × 3 (nombre de liaisons insaturées) $\leq$ 200.

4. Composition de caoutchouc selon l'une quelconque des revendications 1 à 3, laquelle composition de caoutchouc comprend 2 à 20 parties en masse du triester d'acides gras et de glycérol pour 100 parties en masse du composant caoutchouc.

5. Composition de caoutchouc selon l'une quelconque des revendications 1 à 4, dans laquelle le composant caoutchouc contient, pour 100 % en masse de celui-ci, au moins 5 % en masse d'un copolymère, le copolymère étant synthétisé par copolymérisation d'un monomère de diène conjugué avec un composé représenté par la formule (1) suivante :

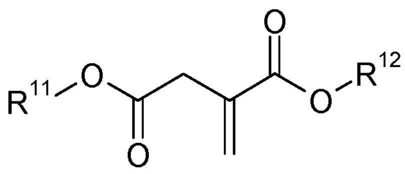

(1)

dans laquelle chacun de $R^{11}$ et $R^{12}$, qui sont identiques ou différents, désigne un atome d'hydrogène ou un groupe hydrocarboné en $C_1$ à $C_{30}$.

**6.** Composition de caoutchouc selon la revendication 5, dans laquelle le copolymère comprend, pour 100 % en masse de ses motifs structurels, 5 à 95 % en masse de motifs dérivés du monomère de diène conjugué et 5 à 95 % en masse de motifs dérivés du composé de formule (1).

**7.** Composition de caoutchouc selon l'une quelconque des revendications 1 à 6, laquelle composition de caoutchouc présente la tangente de perte maximale (tan $\delta$) à -46°C ou moins dans une courbe de dépendance à la température de tan $\delta$, mesurée à une amplitude de déformation de $\pm$ 0,25 %, et a un rapport de la tangente de perte (tan $\delta$ à 20°C) mesurée à 20°C et à une amplitude de déformation de $\pm$ 0,25 % à la tangente de perte (tan $\delta$ à 0°C) mesurée à 0°C et à une amplitude de déformation de $\pm$ 0,25 % qui satisfait à la relation (X) suivante :

$$\tan \delta \text{ à } 20°C / \tan \delta \text{ à } 0°C \geq 0,80.$$

**8.** Composition de caoutchouc selon l'une quelconque des revendications 1 à 7, qui est une composition de caoutchouc pour pneus.

**9.** Pneus comprenant un flanc formé à partir de la composition de caoutchouc de l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2733168 A1
- EP 2329964 A1
- EP 1840161 A1
- JP 2005537369 T
- WO 2015075971 A
- US 4414370 A
- JP S596207 A
- JP H558005 B
- JP H1313522 A
- US 5010166 A


### Non-patent literature cited in the description


- annual research report TREND. Toagosei Co., Ltd, 2000, vol. 3, 42-45